# EUROPÄISCHE PATENTSCHRIFT

(11) **EP 4 212 764 B1**
(45) Veröffentlichungstag und Bekanntmachung des Hinweises auf die Patenterteilung: **23.07.2025**
(21) Anmeldenummer: 23152816.7
(22) Anmeldetag: 21.10.2019
(51) Int. Cl.: F16K 31/00, F16K 31/56

(54) **SICHERHEITSVORRICHTUNG**
SAFETY DEVICE
DISPOSITIF DE SÉCURITÉ

(30) Priorität: 31.10.2018 DE 102018218642
(43) Veröffentlichungstag der Anmeldung: 19.07.2023
(62) Teilanmeldung aus: 19794125.5
(73) Patentinhaber: Shell Internationale Research Maatschappij B.V., 2596 HR The Hague (NL)
(72) Erfinder: HETTINGA, Folkert, 2627 AN Delft (NL); VAN DER WAGT, Peter, 4817 ZJ Breda (NL); KRUIJER, Alfred Arnold, 2596 HR The Hague (NL); VAN RIJS, Willem George Sied, 2288 GK Rijswijk (NL)
(74) Vertreter: Shell Legal Services IP

(56) Entgegenhaltungen:
- DE-A1- 2 011 011
- DE-B3- 102007 032 327
- DE-U1- 29 801 229
- GB-A- 2 383 627
- US-A- 3 512 421
- US-A- 5 497 672

## Beschreibung

Die Erfindung betrifft eine Sicherheitsvorrichtung zum lösbaren Arretieren des Abtriebsglieds eines Linearantriebs.

Derartige Sicherheitsvorrichtungen sind bereits seit Langem bekannt und werden als Fail-Safe-Vorrichtungen dazu verwendet, bei Stromausfall das Abtriebsglied eines Linearantriebs, beispielsweise die Spindel eines Prozessventils in einer definierten Stellung zu halten, also dort zu blockieren. Eine derartige definierte Stellung kann beispielsweise bei einem Prozessventil die Offenstellung oder die Schließstellung eines an die Spindel angekoppelten Ventilglieds sein.

So ist beispielsweise in der DE 10 2007 032 327 B3 eine Ventilstellvorrichtung mit Sicherheitsfunktion offenbart, wobei eine Sicherheitseinrichtung zwischen den Antrieb des Prozessventils und dem Ventilglied eingeschaltet ist. Die Sicherheitseinrichtung weist einen Elektromagneten auf, der bei Bestromung einen Kolben blockiert, wodurch ein Normalbetrieb der Ventilspindel zum Öffnen, Schließen und frei (ohne Feder) Regeln einer Durchgangsöffnung an einer Ventilarmatur mittels eines an die Spindel angekoppelten Ventilglieds möglich ist. Bei Stromausfall wird der Elektromagnet deaktiviert und die Blockierung des Kolbens aufgehoben, wodurch die Ventilspindel unabhängig von der Position des Kolbens in eine Sicherheitsstellung fährt, die in diesem Fall die Geschlossen-Stellung ist.

US 5 497 672 A betrifft ein Ventilbetätigungsmittel, das eine Spindel umfasst, die sich durch den Körper des Betätigungsmittel erstreckt. Die Spindel is an das Ventil gekuppelt, so dass eine Axialbewegung der Spindel das Ventil öffnet und schließt.

DE 298 01 229 U1 betrifft eine Vorrichtung zum Regeln und/oder Schließen sowie zum Schnellschießen einer Stellvorrichtung.

Aufgabe der Erfindung ist es, eine Sicherheitsvorrichtung zum lösbaren Arretieren des Abtriebsglieds eines Linearantriebs zu schaffen, mit deren Hilfe das angeschlossene System zuverlässig in einen vordefinierten Sicherheitszustand überführt werden kann.

Die erfindungsgemäße Sicherheitsvorrichtung zum lösbaren Arretieren des Abtriebsglieds eines Linearantriebs weist folgendes auf:
- eine mit dem Abtriebsglied des Linearantriebs koppelbare Kopplungsstange, wobei das Abtriebsgelied mittels dem Kopplungsstange bewegbar ist,
- ein von der Kopplungsstange linear verschiebbar durchsetztes Gehäuse,
- eine von der Kopplungsstange linear verschiebbar durchsetzte Blockiereinheit, die zwischen einer einen Hub der Kopplungsstange blockierenden Blockierstellung und einer eine Linearbewegung der Kopplungsstange ermöglichenden Freigabestellung relativ bezüglich des Gehäuses bewegbar ist,
- eine Federeinrichtung zur Vorspannung der Blockiereinrichtung in Richtung der Blockierstellung,
- eine Arretiereinrichtung zur Arretierung der Blockiereinheit in der Freigabestellung, wobei die Arretiereinrichtung im Gehäuse aufgenommene Arretier-Wälzkörper und eine von der Kopplungsstange linear verschiebbare durchsetzte Abstützhülse aufweist, wobei die Abstützhülse zwischen eine Abstützposition, in der die Abstütz-Wälzkörper in einer nach radial außen mit der Blockiereinheit in Verriegelungseingriff stehenden Verriegelungsposition gehalten sind und einer Löseposition, in der ein Zurückweichen der Abstütz-Wälzkörper nach radial innen außer Eingriff mit der Blockiereinheit ermöglicht ist, bewegbar ist,
- eine Elektromagneteinrichtung, die bei Bestromung die Abstützhülse in der Abstützposition entgegen der Stellkraft wenigstens einer Auslösefeder einer Auslösefedereinrichtung festhält, derart, dass bei einem Stromausfall die Haltefunktion aufhebbar ist und die Abstützhülse mittels der wenigstens einen Auslösefeder in die Lösestellung gelangt, wodurch die Blockiereinheit mittels der Federeinrichtung in die Blockierstellung überführbar ist,
wobei mehrere um den Umfang der Abstützhülse herum gruppierte Abstütz-Wälzkörper-Gruppen vorgesehen sind die jeweils mehrere in radialer Richtung hintereinander angeordnete Abstütz-Wälzkörper aufweisen wobei eine radiale Erstreckung der Abstütz-Wälzkörper innerhalb einer Abstütz-Wälzkörper-Gruppe in der Arretierposition der Abstützhülse größer ist als in der Löseposition der Abstützhülse.

Mehrere um den Umfang der Abstützhülse herum gruppierte Abstütz-Wälzkörper-Gruppen mit jeweils wenigstens einem Abstütz-Wälzkörper sind vorgesehen. Erfindungsgemäß weisen die Abstütz-Wälzkörper-Gruppen jeweils mehrere in radialer Richtung hintereinander angeordnete Abstütz-Wälzkörper auf. Dadurch ist es möglich, dass die Abstütz-Wälzkörper beim Lösen der Verriegelung der Blockiereinrichtung, um diese in die Blockierstellung zu bringen, aneinander abrollen und somit eine schnelle und technisch einfach umzusetzende Aufhebung der Verriegelung bewirken. Ferner können die Abstütz-Wälzkörper der jeweiligen Abstütz-Wälzkörper-Gruppe in einfacher Weise in Sperrstellung gebracht werden, wodurch ein Abrollen aneinander nicht mehr möglich ist, wodurch die Blockiereinheit verriegelt ist.

Zweckmäßigerweise sind die Abstütz-Wälzkörper einer jeweiligen Abstütz-Wälzkörper-Gruppe in der Löseposition der Abstützhülse in Höhenrichtung übereinander gestaffelt angeordnet. Die radiale Erstreckung der Abstütz-Wälzkörper innerhalb einer Abstütz-Wälzkörper-Gruppe ist in der Arretierposition der Abstützhülse, also in der Verriegelungsstellung größer als in der Löseposition der Abstützhülse, wobei die Staffelung in Höhenrichtung eine Reduzierung der radialen Erstreckung bewirkt.

Die Sicherheitsvorrichtung arbeitet also auf Basis des Zusammenspiels der Elektromagneteinrichtung mit der Arretiereinrichtung und den Abstütz-Wälzkörpern. In der Freigabestellung ist die Blockiereinrichtung verriegelt und nicht aktiv, sodass sich das Abtriebsglied des Linearantriebs und die daran angekoppelte Kopplungsstange innerhalb deren Hubbereich frei bewegen kann. Im Fehlerfall bei Stromausfall löst die Blockiereinrichtung aus, indem die Verriegelung der Abstütz-Wälzkörper aufgehoben wird. Die Federeinrichtung bringt dann die Blockiereinrichtung in die Blockierstellung, in der die Hubbewegung der Kopplungsstange blockiert ist. Die Sicherheitsvorrichtung arbeitet rein mechanisch, dass heißt elektrische Hilfsenergie oder andere nicht elektrische Hilfsenergie, wie beispielsweise Druckluft, ist für die Funktion der Sicherheitsvorrichtung nicht notwendig. Damit ist gewährleistet, dass die Sicherheitsvorrichtung im Fehlerfall zuverlässig arbeitet.

Bei der Weiterbildung der Erfindung ist an der Kopplungsstange ein Anschlag und an der Blockiereinheit ein Gegen-Anschlag ausgebildet, die in der Freigabestellung mit einem den Hub der Kopplungsstange bestimmenden axialen Abstands zueinander angeordnet und in der Blockierstellung das Arretieren des Abtriebsglieds bewirkend aneinander angeschlagen sind.

In besonders bevorzugter Weise weist die Blockiereinheit eine von der Kopplungsstange durchsetzte Blockierhülse auf, die in der Freigabestellung die Arretier-Wälzkörper in Richtung nach radial außen abstützt und in der Verriegelungsstellung hält.

Zweckmäßigerweise weist die Blockierhülse einen insbesondere ringförmigen Aufnahmeraum auf, in dem ein zugeordneter Abstütz-Wälzkörper in der Verriegelungsstellung eintaucht.

Bei einer Weiterbildung der Erfindung weist die Abstützhülse eine Außenwandung auf, an der ein mit dem Aufnahmeraum der Blockiereinrichtung in der Arretierposition zusammenwirkende Abstützhülsen-Aufnahmeraum ausgebildet ist, in den in der Arretierposition ein Abstütz-Wälzkörper eintaucht.

In besonders bevorzugter Weise sind die Abstütz-Wälzkörper zylindrisch ausgebildet. Die Abstütz-Wälzkörper können also als Rollen ausgebildet sein. Alternativ wäre es jedoch auch denkbar, als Wälzkörper Kugeln zu verwenden.

Bei einer Weiterbildung der Erfindung weist die Elektromagneteinrichtung mehrere um die Kopplungsstange herum gruppierte Elektromagnete auf, die die Abstützhülse bei Bestromung gemeinsam in der Abstützposition halten.

Es ist möglich, dass die Elektromagnete jeweils federbelastet sind, insbesondere unterseitig mit einer Rückstellfeder gekoppelt sind, die in der Blockierstellung der Blockiereinheit zusammengedrückt ist und in der Freigabestellung bei Deaktivierung der Elektromagnete diese aus ihrer ursprünglichen Position herausbewegt, wobei ein zugeordneter Positionssensor eine Positionsveränderung feststellen kann.

In besonders bevorzugter Weise weist die Auslösefedereinrichtung mehrere um die Kopplungsstange herum gruppierte Auslösefedern auf, die die Abstützhülse bei Deaktivierung der Elektromagneteinrichtung gemeinsam in die Löseposition bewegen. Zweckmäßigerweise sind die Auslösefedern und die Elektromagnete in Umfangsrichtung versetzt zueinander angeordnet.

Bei einer Weiterbildung der Erfindung weist die Blockierhülse einen mit dem Gegen-Anschlag ausgebildeten Hülseninnenabschnitt auf, der die Kopplungsstange konzentrisch umgibt und der in einen ringförmigen Zwischenraum zwischen einem zylindrischen Gehäuseinnenabschnitt des Gehäuses und der Kopplungsstange eintaucht, und wobei die Blockierhülse einen Hülsenaußenabschnitt besitzt, der den Gehäuseinnenabschnitt konzentrisch umgibt und an dessen Innenwandung der Aufnahmeraum für die Arretier-Wälzkörper ausgebildet ist.

In besonders bevorzugter Weise sind Rückstellmittel zur Rückstellung der Blockiereinheit gegen die Federkraft der Federeinrichtung von der Blockierstellung in die Freigabestellung vorhanden. Die Rückstellmittel können einen mechanischen, fluidischen oder elektrischen Rückstellantrieb zur Rückstellung der Blockiereinheit in die Freigabestellung aufweisen. Beispielsweise kann der Rückstellantrieb als Servomotor ausgebildet sein. Es sind jedoch auch andere Arten von Rückstellantrieben möglich, beispielsweise ein Hydraulik- oder Pneumatikantrieb.

Es ist möglich, dass eine Dämpfungseinrichtung zur Dämpfung der Ausfahrbewegung der Blockiereinheit von der Blockierstellung in die Freigabestellung beim Auslösen der Sicherheitsfunktion vorhanden ist. Zweckmäßigerweise ist der Dämpfer als Öldämpfer ausgebildet. Der Dämpfer besitzt zweckmäßigerweise zwei über eine Drossel miteinander verbundene Ölkammern, wobei zur Einleitung einer Dämpfungsfunktion Hydrauliköl von der einen in die andere Ölkammer verdrängt wird.

Bei einer Weiterbildung der Erfindung ist eine Rückhalteeinrichtung zur Rückhaltung der Abstütz-Wälzkörper gegen Bewegung nach radial außen in der Blockierstellung der Blockiereinheit vorhanden. Da der Aufnahmeraum der Blockierhülse entfernt ist, da die Blockiereinheit ausgelöst hat und sich in der Freigabestellung befindet, besteht die Notwendigkeit, die Abstütz-Wälzkörper zurückzuhalten.

In besonders bevorzugter Weise weist die Rückhalteeinrichtung ein insbesondere dem jeweils radial äußersten Abstütz-Wälzkörper einer jeweiligen Abstütz-Wälzkörper-Gruppe zugeordnetes Rückhalteglied auf, das zwischen einer den zugeordneten Abstütz-Wälzkörpern zurückhaltenden Rückhalteposition und einer Nichtgebrauchsposition beweglich gelagert ist. Zweckmäßigerweise ist das Rückhalteglied federbelastet und ist von einer Rückstellfeder unterstützt, die in der Löseposition der Abstützhülse beziehungsweise Freigabeposition der Blockiereinrichtung das Rückhalteglied in Anlage an den radial äußeren Abstütz-Wälzkörper drückt.

Die Erfindung erfasst ferner eine Antriebseinheit mit einem Linearantrieb und einer Sicherheitseinrichtung, wobei sich die Sicherheitsvorrichtung nach einem der Ansprüche 1 bis 14 auszeichnet.

Ferner umfasst die Erfindung ein Ventil, insbesondere Prozessventil, mit einer Ventilarmatur und einer Antriebseinheit, wobei die Antriebseinheit nach Anspruch 15 ausgebildet ist.

Ein bevorzugtes Ausführungsbeispiel der Erfindung ist in der Zeichnung dargestellt und wird im Folgenden näher erläutert. In der Zeichnung zeigen:
- Figur 1: eine schematische Darstellung eines bevorzugten Ausführungsbeispiels der erfindungsgemäßen Sicherheitsvorrichtung im Längsschnitt, wobei sich die Blockiereinheit in der Freigabestellung befindet,
- Figur 2: eine schematische Darstellung der Sicherheitsvorrichtung von Figur 1, wobei sich die Blockiereinheit bei ausgelöster Sicherheitsfunktion in der Blockierstellung befindet,
- Figur 3: eine schematische Darstellung der Einzelheit X aus Figur 1,
- Figur 4: eine vergrößerte Darstellung der Einzelheit X aus Figur 1, beim Rückstellen der Abstützhülse von der Löseposition in die Abstützposition,
- Figur 5: eine vergrößerte Darstellung der Einzelheit Y aus Figur 2 und
- Figur 6: ein Schaltbild einer elektronischen Schaltung der elektrischen Unterbrechung (elektronische Sicherheitslösung).

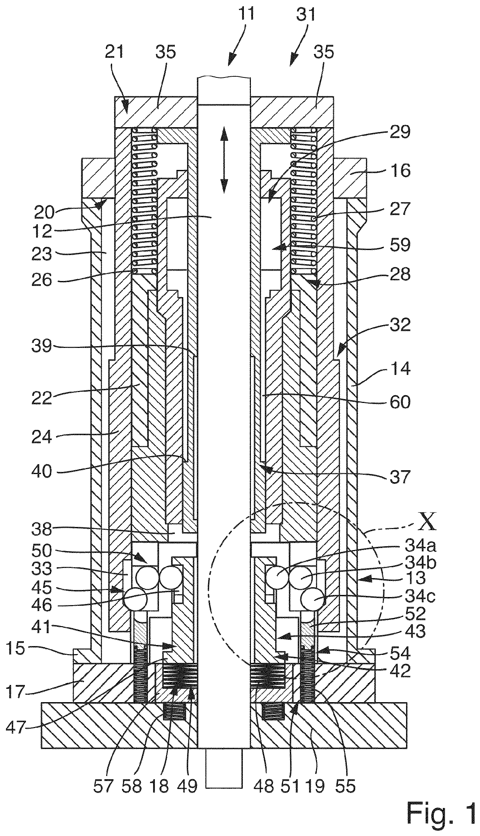

Die Figuren 1 bis 6 zeigen ein bevorzugtes Ausführungsbeispiel der erfindungsgemäßen Sicherheitsvorrichtung 11. Die Sicherheitsvorrichtung 11 ist im gezeigten Beispielsfall Bestandteil eines Ventils (nicht dargestellt), insbesondere Prozessventils, und ist dort zwischen einem Ventilantrieb in Form eines Linearantriebs (nicht dargestellt) und der Ventilarmatur (nicht dargestellt) eingeschaltet. Bei dem Ventilantrieb kann es sich beispielsweise um einen elektrischen oder fluidischen, insbesondere pneumatischen Linearantrieb handeln. Der Linearantrieb besitzt ein Abtriebsglied (nicht dargestellt), das beispielsweise im Falle eines fluidischen Linearantriebs die Kolbenstange eines Arbeitszylinders sein kann, die ihrerseits mit einem Antriebskolben verbunden ist, der durch Fluiddruckbeaufschlagung in einem Zylindergehäuse hin und her bewegbar ist.

Das Abtriebsglied des Linearantriebs ist mit einer Kopplungsstange 12 gekoppelt, die Bestandteil der Sicherheitsvorrichtung 11 ist. Die Kopplungsstange 12 kann im Falle eines Prozessventils auch als Spindel bezeichnet werden.

Das Ventil besitzt ferner eine Ventilarmatur (nicht dargestellt), das auch als Ventilgehäuse bezeichnet werden kann. In dem Ventilgehäuse erstreckt sich zwischen einem Eingang und einem Ausgang ein Durchströmungskanal. Im Durchströmungskanal befindet sich zwischen dem Eingang und dem Ausgang eine Durchströmungsöffnung, die von einem Ventilsitz umgeben ist. Dem Ventilsitz ist ein Ventilglied zugeordnet, das seinerseits mit der Kupplungsstange 12 verbunden ist.

Das Ventilglied ist mittels eines Stellhubs der Kopplungsstange 12 zwischen einer Absperrstellung, in der das Ventilglied fluiddicht am Ventilsitz anliegt und einer Offenstellung, in der das Ventilglied vom Ventil abgehoben ist, bewegbar.

Der Stellhub der Kopplungsstange 12 wird durch den Ventilantrieb erzeugt.

Die Sicherheitsvorrichtung 11 ist demnach im Beispielsfall zwischen dem Ventilantrieb und der Ventilarmatur eingeschaltet.

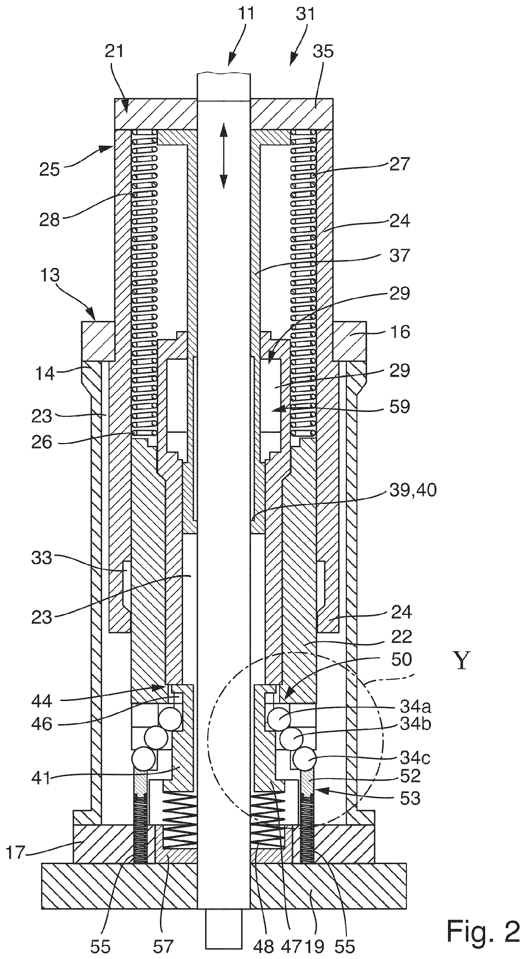

Wie insbesondere in den Figuren 1 und 2 gezeigt, besitzt die Sicherheitsvorrichtung 11 ein Gehäuse 13, das von der Kopplungsstange 12 linear verschiebbar durchsetzt ist.

Das Gehäuse 13 besitzt einen hülsenförmigen Gehäuseaußenabschnitt 14, der an seinem unteren Ende mit einem unteren Befestigungsflansch 15 und an seinem oberen Ende mit einem oberen Befestigungsflansch 16 ausgestattet ist. Der untere Befestigungsflansch 15 des Gehäuses 13 ist an einem ebenfalls zum Gehäuse 13 gehörenden scheibenförmigen Magnetgehäuse 17 befestigt, das die nachfolgend noch näher beschriebene Elektromagneteinrichtung 18 beherbergt. Das Magnetgehäuse 17 wiederum ist mit einem Sockelflansch 19 verbunden, der ebenfalls von der Kopplungsstange 12 linear verschiebbar durchsetzt ist. Über den Sockelflansch 19 lässt sich die Sicherheitsvorrichtung 11 beispielsweise an einer Befestigungsschnittstelle der Ventilarmatur (nicht dargestellt) des Ventils befestigen.

Der obere Befestigungsflansch 16 bildet insbesondere mit seiner ringförmigen Innenschulter einen oberen Anschlag 20 für eine nachfolgend noch näher beschriebene Blockiereinheit 21, wodurch das Ausfahren der Blockiereinheit aus dem Gehäuse 13 verhindert wird, wenn die Sicherheitsfunktion ausgelöst wird.

Wie insbesondere in den Figuren 1 und 2 gezeigt, besitzt das Gehäuse 13 einen Gehäuseinnenabschnitt 22, der vom Gehäuseaußenabschnitt 14 konzentrisch umschlossen ist. Der Gehäuseinnenabschnitt 22 ist ebenfalls als Hülse ausgebildet. Zwischen der Außenwandung des Gehäuseinnenabschnitts 22 und der Innenwandung des Gehäuseaußenabschnitts 14 ist ein ringförmiger Zwischenraum 23 ausgebildet, in dem ein Hülsenaußenabschnitt 24 einer Blockierhülse 25 der Blockiereinheit 21 linearverschieblich aufgenommen ist.

Die axiale Erstreckung des Gehäuseinnenabschnitts 22 ist geringer als die axiale Erstreckung des Gehäuseaußenabschnitts 14. An der Mantelfläche des Gehäuseinnenabschnitts 22 ist eine Ringschulter ausgebildet, die eine Anlagefläche 26 für eine nachfolgend noch näher beschriebene Feder 27 einer Federeinrichtung 28 bildet.

Die Innenwandung des Gehäuseinnenabschnitts 22 springt im Bereich ihres oberen Endes nach radial außen, wodurch die Außenwand einer Kammer 29 gebildet wird, die nachfolgend noch näher beschrieben ist.

Wie bereits erwähnt umfasst die Sicherheitsvorrichtung 11 eine von der Kopplungsstange 12 linearverschiebbar durchsetzte Blockiereinheit 21, die zwischen einer einen Hub der Kopplungsstange 12 blockierenden Blockierstellung 30 (Figur 2) und einer eine Linearbewegung der Kopplungsstange 12 ermöglichenden Freigabestellung 31 (Figur 1) relativ bezüglich des Gehäuses 13 bewegbar ist.

Hauptbestandteil der Blockiereinrichtung 21 ist eine Blockierhülse 25, die den bereits erwähnten Hülsenaußenabschnitt 24 aufweist, der im Zwischenraum 23 zwischen dem Gehäuseinnenabschnitt 22 und dem Gehäuseaußenabschnitt 14 linearbeweglich geführt aufgenommen ist. Der Hülsenaußenabschnitt 24 besitzt an seiner Mantelfläche eine Ringschulter die einen oberen Gegen-Anschlag 32 bildet, der bei Auslösung der Sicherheitsfunktion an den oberen Anschlag 20 am Gehäuseaußenabschnitt 14 anschlägt und somit ein Ausfahren der Blockierhülse 25 aus dem Gehäuse verhindert.

Im Bereich des unteren Endes des Hülsenaußenabschnitts 24 der Blockierhülse 25 befindet sich an der Innenwandung ein ringförmiger Aufnahmeraum 33, in den ein nachfolgend noch näher bezeichneter und beschriebener Abstütz-Wälzkörper 34 zumindest teilweise eintauchen kann.

An der Oberseite der Blockierhülse 25 ist am Hülsenaußenabschnitt 24 ein Hülsenflansch 35 befestigt, an dem wiederum ein Linearantrieb angedockt werden kann. Der Hülsenflansch 35 stellt ferner eine Verbindung zu einem Hülseninnenabschnitt 36 der Blockierhülse 25 her. An der Innenseite des Hülsenflansches 35 ist eine weitere Ringschulter ausgebildet, die eine weitere Anlagefläche 36 für die Feder 27 der Federeinrichtung 28 bildet. Der Hülseninnenabschnitt 37 ist in einem von der Innenwandung des Gehäuseinnenabschnitts 22 und der Außenwandung der Kopplungsstange 12 gebildeten ringförmigen Zwischenraum 38 linearbeweglich aufgenommen.

Wie insbesondere in den Figuren 1 und 2 gezeigt, befindet sich an der Kopplungsstange eine Ringschulter, die einen Anschlag 39 bildet. Der Anschlag 39 an der Kopplungsstange 12 korrespondiert mit einem Gegen-Anschlag 40 am Hülseninnenabschnitt 37, der durch eine endseitige Durchmesserverkleinerung der Durchtrittsöffnung des Hülseninnenabschnitts 37 gebildet wird.

Wie die Zusammenschau der Figuren 1 und 2 zeigt, sind Anschlag 39 und Gegen-Anschlag in der Freigabestellung 31 mit axialem Abstand zueinander ausgerichtet, wodurch eine Hubbewegung der Kopplungsstange 12 ermöglicht ist. In der Blockierstellung 30 hingegen, die in der Figur 2 dargestellt ist, sind Anschlag 39 an der Kopplungsstange 12 und Gegen-Anschlag am Hülseninnenabschnitt 37 hingegen auf Kontakt zueinander, wodurch eine Blockierung der Kopplungsstange 12 bewirkt wird, wodurch eine Hub der Kopplungsstange 12 unterbunden wird.

Wie insbesondere in den Figuren 1 und 2 gezeigt, bildet die Außenwandung des Hülseninnenabschnitts 37 der Blockierhülse 25 die Innenwand der nachfolgend noch beschriebenen Kammer 29.

Die Sicherheitsvorrichtung 11 umfasst ferner eine Arretiereinrichtung 41 zur Arretierung der Blockiereinheit 21 in der Freigabestellung 31, wobei die Arretiereinrichtung 41 im Gehäuse 13 aufgenommene Arretier-Wälzkörper 34a, 34b, 34c und eine von der Kopplungsstange 12 linear verschiebbar durchsetzte Abstützhülse 42 aufweist.

Wie insbesondere die Zusammenschau der Figuren 1 und 2 sowie 4 und 5 zeigt, ist die Abstützhülse 42 zwischen einer Abstützposition 43 (Figur 1) und einer Löseposition 44 (Figur 2) beweglich geführt. In der Abstützposition 43 sind die Abstütz-Wälzkörper 34a, 34b ,34c in einer nach radial außen mit der Blockiereinheit 21 in Verriegelungseingriff stehenden Verriegelungsposition 45 gehalten, während in der Löseposition 44 ein Zurückweichen der Abstütz-Wälzkörper 34a, 34b, 34c nach radial innen außer Eingriff mit der Blockiereinheit 21 ermöglicht ist.

Die Abstützhülse 42 besitzt an ihrer Mantelfläche einen ringförmigen Abstützhülsen-Aufnahmeraum 46, der in der Freigabestellung mit dem Aufnahmeraum 33 am Hülseninnenabschnitt 37 der Blockierhülse 25 zusammenwirkt, derart, dass der ringförmige Abstützhülsen-Aufnahmeraum 46 dem ringförmigen Aufnahmeraum 33 gegenüberliegt. Die Abstützhülse 42 besitzt an ihrer Unterseite einen gegenüber dem Rest der Abstützhülse 42 durchmessergrößere scheibenförmigen Beaufschlagungsabschnitt 47, beziehungsweise Beaufschlagungsflansch, der mit nachfolgend noch näher beschriebenen Auslösefedern 48 einer Auslösefedereinrichtung 49 zusammenwirkt.

Die Arretiereinrichtung 41 besitzt mehrere um den Umfang der Abstützhülse 42 herum gruppierte Abstütz-Wälzkörper-Gruppen 50 mit jeweils mehreren Abstütz-Wälzkörpern 34a-c, im Beispielsfall jeweils drei Abstütz-Wälzkörpern 34a-c. Die Abstützwälzkörper 34a-c sind im Beispielsfall als Abstütz-Rollen ausgebildet. Die Abstütz-Wälzkörper 34a-c sind in radialer Richtung hintereinander angeordnet und weisen demnach je Abstütz-Wälzkörper-Gruppe 50 einen inneren Abstütz-Wälzkörper 34a, einen mittleren Abstütz-Wälzkörper 34b und einen äußeren Abstütz-Wälzkörper 34c auf.

Wie insbesondere in Figur 2 gezeigt, sind die Abstütz-Wälzkörper 34a-c in der Blockierstellung auch in Höhenrichtung beziehungsweise Axialrichtung gestaffelt hintereinander angeordnet. Der innere Abstütz-Wälzkörper taucht in jedem Fall sowohl in der Blockierstellung 30 als auch in der Freigabestellung 31 in den ringförmigen Abstützhülsen-Aufnahmeraum 46 ein. Der äußere Abstütz-Wälzkörper 34c hingegen taucht lediglich in der verriegelnden Freigabestellung in den ringförmigen Aufnahmeraum am Hülseninnenabschnitt 37 der Blockierhülse 25 ein, wo hingegen er in der in Figur 2 gezeigten Blockierstellung nach radial innen eingerückt ist.

Die Sicherheitsvorrichtung 11 umfasst ferner eine Elektromagneteinrichtung 18, die bei Bestromung die Abstützhülse 42 an der Abstützposition 43 entgegen der Stellkraft wenigstens einer Auslösefeder 48 festhält, derart, dass bei einem Stromausfall die Haltefunktion aufhebbar ist und die Abstützhülse 42 mittels der wenigstens einen Auslösefeder 48 in die Löseposition 44 gelangt, wodurch die Blockiereinheit 21 mittels der Federeinrichtung 28 in die Freigabestellung 31 überführbar ist.

Im gezeigten Beispielsfall sind im Magnetgehäuse 17 mehrere um die Kopplungsstange 12 herum gruppierte Elektromagnete 51 angeordnet, die die Abstützhülse 42 bei Bestromung gemeinsam in der Abstützposition 42 halten. Bei Bestromung wird die Abstützhülse 42 also entgegen der Federkraft der Auslösefedern 48 in der Abstützposition 43 gehalten.

Die Auslösefedereinrichtung 49 besitzt hierzu mehrere um die Kopplungsstange 12 herum gruppierte Auslösefedern 48, die die Abstützhülse bei Deaktivierung der Elektromagneteinrichtung 18 gemeinsam in die Löseposition 44 bewegen. Wie insbesondere in Figur 1 gezeigt, sind im Magnetgehäuse mehrere um die Kopplungstange herum gruppierte zylindrische Aufnahmen ausgebildet, in denen die zugeordneten Auslösefedern 48 aufgenommen sind.

Die Sicherheitsvorrichtung 11 umfasst ferner eine Rückhalteinrichtung 51 zur Rückhaltung der Abstütz-Wälzkörper 34a-c gegen Bewegung nach radial außen in der Blockierstellung 30 der Blockiereinheit 21, wenn also der Aufnahmeraum 33 am Hülseninnenabschnitt 37 der Blockierhülse 25 nach oben weg bewegt ist.

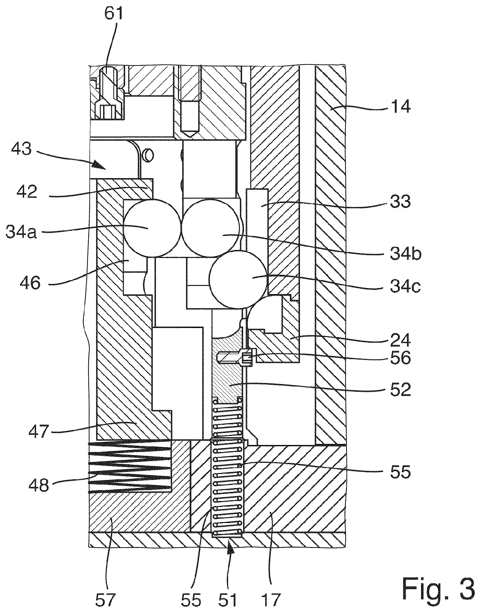

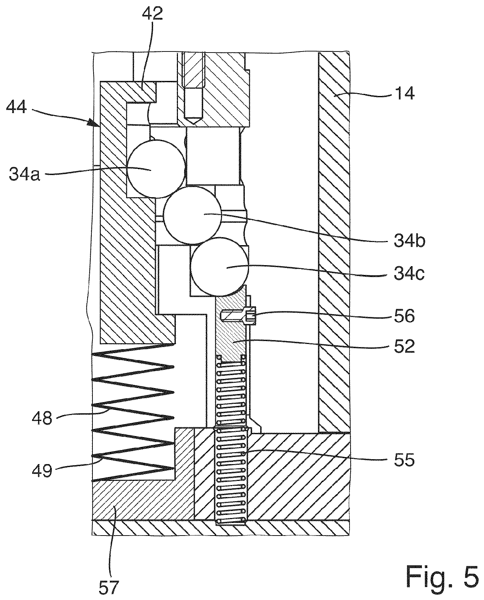

Wie insbesondere in den Figuren 3 bis 5 gezeigt, besitzt die Rückhalteinrichtung 51 je Abstütz-Wälzkörper-Gruppe 50 ein Rückhalteglied 52, das zwischen einer den zugeordneten Abstütz-Wälzkörper 34c zurückhaltende Rückhalteposition 53 und einer Nichtgebrauchsposition 54 beweglich gelagert ist. Den Rückhaltegliedern 52 ist jeweils eine Rückstellfeder 55 zugeordnet, die sich einerseits an der Unterseite des Rückhalteglieds 52 und andererseits am Sockelflansch 19 abstützt. Wie insbesondere in den Figuren 3 und 5 gezeigt, ist am Rückhalteglied 52 ein nach radial außen abstehender Mitnehmer 56, beispielsweise in Form einer Schraube, angeordnet, der bei der Rückstellung der Blockiereinheit von der Blockierstellung 30 in die Freigabestellung 31 durch den Hülsenaußenabschnitt 24 beaufschlagt wird, das heißt die Unterkante des Hülsenaußenabschnitts gelangt in Kontakt mit dem Mitnehmer 56, wodurch das Rückhalteglied 52 entgegen der Federkraft der Rückstellfeder 55 zurückgedrückt wird. Beim Auslösen der Sicherheitsfunktion gelangt die Blockiereinheit 21 in die Blockierstellung, wodurch die Blockierhülse 25 nach oben bewegt wird und dadurch die Rückstellfeder 55 das Rückhalteglied 52 in Anlage zum äußeren Abstütz-Wälzkörper 34c bringt. Die Oberseite des Rückhalteglieds 52 kann an die Form des zugeordneten Abstütz-Wälzkörpers 34c, also beispielsweise an die Zylinderform der Abstütz-Rolle angepasst sein.

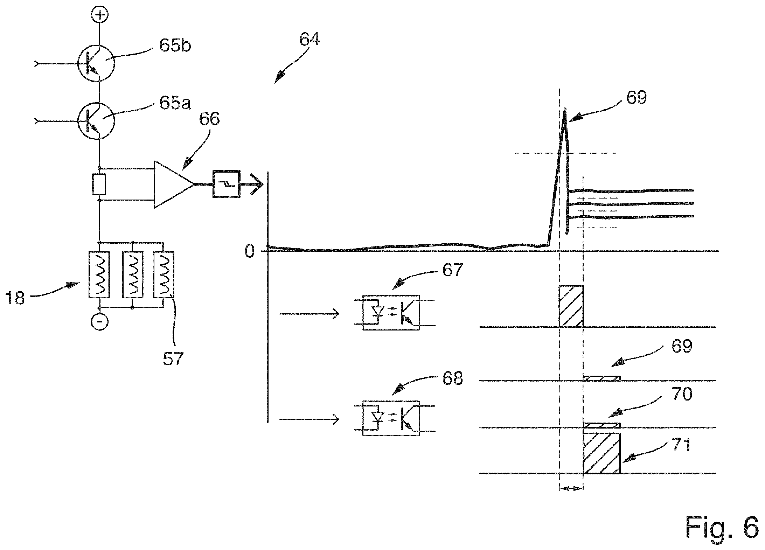

Wie in Fig. 6 anhand eines Schaltbildes dargestellt, ist eine Positionsdetektionseinrichtung vorgesehen, mit der die Position der Elektromagneten 57 der Elektromagneteinrichtung 18 detektiert werden kann, um somit eine Rückmeldung darüber zu erhalten, ob die Elektromagneten 57 aktiviert, also bestromt oder deaktiviert sind. Hierzu sind die Elektromagneten 57 beweglich im Magnetgehäuse 17 gelagert und sind unterseitig durch jeweils eine Rückstellfeder 58 (Figur 1) abgestützt. Im aktivierten Zustand der Elektromagneten 57 ist die Abstützhülse 42 angezogen und befindet sich in ihrer Abstützposition 43, wodurch die Auslösefedern 48 zurückgedrückt sind und auch die Elektromagneten 60 die Rückstellfedern 58 zurückdrücken. Nach dem Auslösen der Sicherheitsfunktion entfernt sich die Abstützhülse 42 von den Elektromagneten 57, da die Auslösefedern 48 die Abstützhülse 42 nach oben in die Löseposition 44 drücken. Dadurch können die Rückstellfedern 58 die Elektromagneten 57 nach oben drücken, wobei diese Positionsänderung mittels eines Positionssensors (nicht dargestellt) detektiert wird.

Die Sicherheitsvorrichtung umfasst ferner Rückstellmittel zur Rückstellung der Blockiereinheit gegen die Federkraft der Federeinrichtung 28 von der Blockierstellung 30 in die Freigabestellung 31. Die Rückstellmittel umfassen im gezeigten Beispielsfall einen elektrischen Rückstellantrieb, beispielsweise in Form eines Servomotors, der dafür sorgt, dass die Blockierhülse 25 entgegen der Federkraft der Feder 27 der Federeinrichtung 28 zurückgedrückt wird.

Die Sicherheitsvorrichtung 11 umfasst ferner eine Dämpfungseinrichtung 59, die im Beispielsfall als hydraulische Dämpfungseinrichtung 59 ausgeführt ist.

Wie bereits vorstehend beschrieben ist durch die Innenwandung des Gehäuseinnenabschnitts 22 und der Außenwandung des Hülseninnenabschnitts 37 eine Kammer 29 gebildet, die mittels Hydrauliköl befüllbar ist.

Wie in Figur 1 gezeigt, ist unterhalb der ersten Kammer 29 eine zweite kleinere Kammer 60 ausgebildet, und zwar nur für den Fall, wenn sich die Blockierhülse in der Freigabestellung befindet, also die Blockierhülse 25 eingefahren und verriegelt ist. Die beiden Kammern 60 sind über eine Drossel (nicht dargestellt) miteinander verbunden. Beim Auslösen der Sicherheitsfunktion wird daher Hydrauliköl von der zweiten Kammer 60 über die Drossel in die erste Kammer 29 verdrängt, wodurch eine Dämpfungsfunktion ausgelöst wird. Das in der ersten Kammer befindlichen Hydrauliköl kann dann teilweise in eine nicht dargestellte Verdrängungskammer beziehungsweise Ausgleichskammer strömen.

Im Normalbetrieb befindet sich die Blockiereinheit 21 eingefahren und verriegelt in der Freigabestellung 31, die in Figur 1 gezeigt ist. In der Freigabestellung 31 sind der Anschlag 39 und der Gegen-Anschlag 40 in axialer Richtung voneinander entfernt, wodurch eine Hubbewegung der Kopplungsstange 12 innerhalb des dadurch gebildeten Hubs ermöglicht ist. Das Verriegeln der Blockiereinheit 21 wird durch die Bestromung der Elektromagneten 57 erzielt. Sind die Elektromagneten 57 aktiviert, also bestromt, so halten diese gemeinsam die Abstützhülse 42 in der Abstützposition 43.

Entscheidend ist, dass sich die Abstütz-Wälzkörper der Abstütz-Wälzkörper-Gruppen 50 jeweils in der Verriegelungsposition 45 befinden. Dies wird dadurch erzielt, dass der ringförmige Abstützhülsen-Aufnahmeraum 46 und der ringförmige Aufnahmeraum 33 am Hülsenaußenabschnitt 34 der Blockierhülse 25 einander gegenüberliegen. In dieser Stellung taucht der äußere Abstütz-Wälzkörper 34c in den Aufnahmeraum 33 an der Blockierhülse 25 ein. Gleichzeitig ist der innere Abstütz-Wälzkörper 34a in den ringförmigen Abstützhülsen-Aufnahmeraum 46 eingetaucht. Obgleich die Feder 27 der Federeinrichtung 28 bestrebt ist, die Blockierhülse 25 aus dem Gehäuse 13 herauszudrücken ist dies nicht möglich, da die Abstütz-Wälzkörper 34a-c miteinander verblockt sind und die der äußere Abstütz-Wälzkörper 34c ein Vorbeibewegen der Blockierhülse an ihm selber verhindert. Die Rückstellkraft der Fedre 27 wirkt daher auf den äußeren Abstütz-Wälzkörper 34c, dann auf den mittleren Abstütz-Wälzkörper 34b und dann auf den inneren Abstütz-Wälzkörper 34c, der jedoch ebenfalls seine Abstützung erhält, da die Abstützhülse angezogen ist und sich in der Abstützposition 34 befindet.

Bei Stromausfall werden die Elektromagneten 57 deaktiviert wodurch deren Haltekraft für die Abstützhülse 42 verloren geht. In diesem Fall drückten die Auslösefedern 48 die Abstützhülse 43 nach oben in deren Löseposition 44, wie sie in Figur 2 dargestellt ist. Da der ringförmige Abstützhülsen-Aufnahmeraum 46 eine axiale Erstreckung aufweist, die größer ist als die axiale Erstreckung des inneren Abstütz-Wälzkörpers 34a, kann sich die Abstützhülse 42 an dem inneren Abstütz-Wälzkörper 34a vorbeibewegen. Kommt die Abstützhülse 42 dann mit ihrer unteren Ringschulter des Abstützhülsen-Aufnahmeraums 46 in Kontakt mit dem inneren Abstütz-Wälzkörpers 34c, so wird dieser mit der Abstützhülse 42 nach oben bewegt, wodurch Freiraum für den mittleren Abstützhülsen-Wälzkörper 34b geschaffen wird. Der mittlere Abstütz-Wälzkörper 34b kann dann ein Stück weit nach radial innen rücken, wodurch Platz für den äußeren Abstütz-Wälzkörper 34c geschaffen wird, der ebenfalls nach radial innen einrücken kann. Dadurch wird die Verriegelung der Blockiereinheit aufgehoben, sodass die Federkraft der stark dimensionierten Feder 27 der Federeinrichtung 28 die Blockierhülse 25 nach oben aus dem Gehäuse herausdrückt, bis der obere Gegen-Anschlag 32 am Hülsenaußenabschnitt 24 an den oberen Anschlag 20 am Gehäuseaußenabschnitt 14 anschlägt.

Gleichzeitig wird die Rückhalteinrichtung 41 aktiv und die Rückhalteglieder 42 werden durch die Rückstellfedern 55 nach oben in Kontakt zu den zugeordneten äußeren Abstütz-Wälzkörpern 34c gefahren, wodurch der äußere Abstütz-Wälzkörper gehalten wird.

Beim Ausfahren der Blockierhülse wird zudem das in der zweiten Kammer 60 befindliche Hydrauliköl in die erste Kammer verdrängt, wodurch eine Dämpfungsfunktion ausgelöst wird, die verhindert, dass die Blockierhülse in Folge der hohen Federkraft der Feder 27 der Federeinrichtung 28 schlagartig ausgestoßen wird.

In der in Figur 2 gezeigten Blockierstellung ist die Blockierhülse 25 entriegelt und aus dem Gehäuse 13 ausgefahren. In diesem Zustand schlägt der Gegenanschlag 40 am Hülseninnenabschnitt 37 der Blockierhülse 25 an den an der Kopplungsstange 12 angeordneten Anschlag 39 an, wodurch eine Hubbewegung der Kopplungsstange 12 nach unten verhindert ist. Dadurch kann beispielsweise ein angekoppeltes Ventilglied in eine definierte Offen-Position gefahren werden.

Die Rückstellung der Blockiereinheit 21 von der in Figur 2 gezeigten Blockierstellung 30 in die in Figur 1 gezeigte Freigabestellung 31 läuft folgendermaßen ab:
Mittels eines Servomotors wird eine Kraft auf die Blockierhülse 25 ausgeübt, wodurch die Blockierhülse entgegen der Federkraft der Federeinrichtung 28 in das Gehäuse 13 einfährt. Beim Einfahren der Blockierhülse werden also der Hülsenaußenabschnitt 24 und auch der Hülseninnenabschnitt 37 nach unten bewegt.

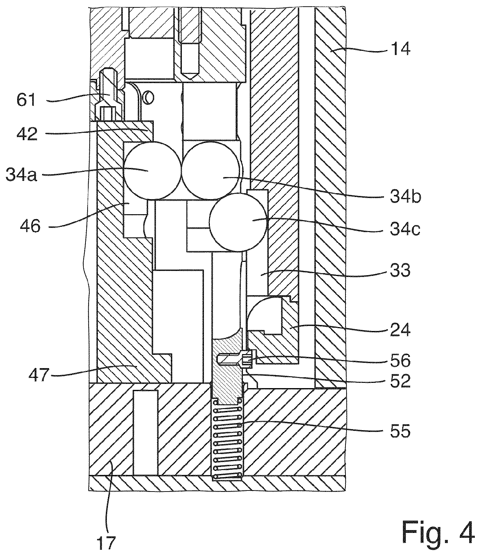

Wie insbesondere in Figur 4 gezeigt, ist an der Unterseite des Hülseninnenabschnitts 37 ein insbesondere in der Höhe verstellbares Beaufschlagungselement 61, beispielsweise in Form einer Schraube angeordnet, die beim Einfahren der Blockierhülse mit der oberen Stirnseite der Abstützhülse, die sich nach wie vor in der Löseposition 44 befindet, in Kontakt kommt. Das Beaufschlagungselement 61 drückt daher die Abstützhülse 42 entgegen der Federkraft der Auslösefedern 48 zurück in die Abstützposition 43 und in den Bereich der magnetischen Anziehung der Elektromagneten 57, die aktiviert sind und die Abstützhülse 42 in der Abstützposition 43 halten. Gleichzeitig werden die Rückhalteglieder 52 durch Anlage der Innenkante des Hülsenaußenabschnitts entgegen der Federkraft ihrer Rückstellfedern 55 nach unten gedrückt und der Aufnahmeraum 33 im Bereich des Hülsenaußenabschnitts kommt in den Bereich des äußeren Abstütz-Wälzkörpers 34c, der dann in den ringförmigen Aufnahmeraum 33 eintaucht.

Nach dem Verlagern der Abstützhülse von deren Löseposition 44 in die Abstützposition 34 kann dann die Blockierhülse 25 ein Stück weit nach oben gefahren werden, wodurch die Verriegelungsposition 45 der Abstütz-Wälzkörper 34a-c erreicht wird.

Die Figur 6 zeigt ein schematisches Schaltbild einer elektronischen Schaltung 64 zur Kontrolle der elektronischen Unterbrechung (elektronische Sicherheitslösung). Die Schaltung ist Bestandteil der Sicherheitsvorrichtung 11.

Es handelt sich hierbei um eine Einzeltransistorschaltung, die vom Ruhestrom des elektrischen Stellmotors in Form des Servomotors gespeist wird.

Die elektronische Schaltung 64 umfasst einen Stromkreis, in den die Elektromagneteinrichtung 18 eingeschaltet ist. In den Stromkreis sind zwei Schalter in Form von Transistoren 65a, 65b, insbesondere npn-Tranistoren eingeschaltet. Der erste Transistor 65a hängt an einer übergeordneten Steuerung, insbesondere SPS-Steuerung. Ist der Ausgang bestromt also high ist der Schalter geschlossen. Der zweite Transistor 65b ist ein redundanter Sicherheitskontakt. Ist der Ausgang des zweiten Transistors 65b bestromt also high ist der Schalter geschlossen. Die Elektromagneten 57 der Elektromagneteinrichtung 18 werden nur dann erregt, wenn die beiden Ausgänge der Transistoren 65a, 65b high sind. Die Elektromagneten 57 sind parallel geschaltet, so dass sie gleichzeitig schalten.

Die beiden Ausgangssignale werden über eine Strommess- und Detektionsschaltung 66 gesteuert. Es lassen sich insgesamt zwei Situationen voneinander unterscheiden. Die erste Situation wird als SPIKE 67 oder Spitze bezeichnet, die andere Situation als ALIVE 68 oder Fehler. Die Situation ist SPIKE 67, falls ein Einschaltpeak 69 insbesondere in Form eines 0,5 s high-Impulses erkannt wird. Dies ist prinzipiell unabhängig von der Anzahl der tatsächlichen schaltenden Elektromagnete 57. Beispielhaft sind drei Elektromagneten 57 gezeigt. Selbstverständlich ist es möglich, die Sicherheitsvorrichtung auch mit mehr als drei parallel geschalteten Elektromagneten 57 zu betreiben.

Die Einschaltspitze ist insbesondere erheblich höher als der Nennstrom. Wenn der Strom also weit über der normalen Leistungsaufnahme liegt, wird der SPIKE-Ausgang für beispielsweise 0,5 s high. Ein Einschaltpeak 69 ergibt sich nur dann, falls Metall am Magneten anliegt, d. h. die Elektromagneten 57 entgegen der Federkraft der Rückstellfeder 58 am metallenen Sockelflansch 19 anliegen. Dies ist der Fall, wenn die Blockiereinheit 21 verriegelt ist (Fig. 1).

Die Situation ist ALIVE 68 (Fehler), falls nicht alle Elektromagneten 57 erregt sind, beispielsweise nur einer oder zwei oder, was im Schaltbild durch die Bezugszeichen 69 (ein Magnet nicht erregt) und 70 (zwei Magnete nicht erregt) gezeigt ist. Jedoch kann auch die Situation (Bezugszeichen 71) erkannt werden, dass zwar alle drei Elektromagneten 57 erregt sind, jedoch nicht entgegen der Rückstellkraft der Rückstellfeder in ihre Grundstellung zurückgedrückt sind. Dann liegt kein Metall an den Elektromagneten 57 an, sondern es ist ein Luftspalt ausgebildet, so dass der gemessene Wert des Stroms deutlich geringer ist. In diesem Fall tritt kein Einschaltpeak 69 auf.

## Patentansprüche

1. Sicherheitsvorrichtung zum lösbaren Arretieren des Abtriebsgliedes eines Linearantriebs aufweisend:
- eine mit dem Abtriebsglied des Linearantriebs koppelbare Kopplungsstange (12), wobei das Abtriebsglied mittels dem Kopplungsstange (12) bewegbar ist,
- ein von der Kopplungsstange (12) linear verschiebbar durchsetztes Gehäuse (13),
- eine von der Kopplungsstange (12) linear verschiebbar durchsetzte Blockiereinheit (21), die zwischen einer einen Hub der Kopplungsstange (12) blockierenden Blockierstellung (30) und einer eine Linearbewegung der Kopplungsstange (12) ermöglichenden Freigabestellung (31) relativ bezüglich des Gehäuses (13) bewegbar ist,
- eine Federeinrichtung (28) zur Vorspannung der Blockiereinheit (21) in die Blockierstellung (30),
- eine Arretiereinrichtung (41) zur Arretierung der Blockiereinheit (21) in der Freigabestellung (31), wobei die Arretiereinrichtung (41) im Gehäuse (13) aufgenommene Arretier-Wälzkörper (34a-c) und eine von der Kopplungsstange (12) linear verschiebbar durchsetzte Abstützhülse (42) aufweist, wobei die Abstützhülse (42) zwischen einer Abstützposition (43), in der die Abstütz-Wälzkörper (34a-c) in einer nach radial außen mit der Blockiereinheit (21) in Verriegelungseingriff stehenden Verriegelungsposition (45) gehalten sind und einer Löseposition (44), in der ein Zurückweichen der Abstütz-Wälzkörper (34a-c) nach radial innen außer Eingriff mit der Blockiereinheit (21) ermöglicht ist, bewegbar ist,
- einer Elektromagneteinrichtung (18), die bei Bestromung die Abstützhülse (42) in der Abstützposition (43) entgegen der Stellkraft wenigstens einer Auslösefeder (48) einer Auslösefedereinrichtung (49) festhält, derart, dass bei einem Stromausfall die Haltefunktion aufhebbar ist und die Abstützhülse (42) mittels der wenigstens einen Auslösefeder (48) in die Lösestellung (44) gelangt, wodurch die Blockiereinheit (21) mittels der Federeinrichtung (28) in die Blockierstellung (30) überführbar ist,
**dadurch gekennzeichnet, dass** mehrere um den Umfang der Abstützhülse (42) herum gruppierte Abstütz-Wälzkörper-Gruppen (50) vorgesehen sind die jeweils mehrere in radialer Richtung hintereinander angeordnete Abstütz-Wälzkörper (34a-c) aufweisen, wobei eine radiale Erstreckung der Abstütz-Wälzkörper (34a-c) innerhalb einer Abstütz-Wälzkörper-Gruppe (50) in der Arretierposition der Abstützhülse (42) größer ist als in der Löseposition (44) der Abstützhülse (42).

2. Sicherheitsvorrichtung nach Anspruch 1, **dadurch gekennzeichnet, dass** die Abstütz-Wälzkörper (34a-c) einer jeweiligen Abstütz-Wälzkörper-Gruppe (50) in der Löseposition (44) der Abstützhülse (42) in Höhenrichtung übereinander gestaffelt angeordnet sind, wobei die Staffelung in Höhenrichtung eine Reduzierung der radialen Erstreckung bewirkt.

3. Sicherheitsvorrichtung nach einem der vorhergehenden Ansprüche, **dadurch gekennzeichnet, dass** die Blockiereinheit (21) eine von der Kopplungsstange (12) durchsetzte Blockierhülse (25) aufweist, die in der Freigabestellung (31) die Arretier-Wälzkörper (34a-c) in Richtung nach radial außen abstützt und in der Verriegelungsposition (45) hält.

4. Sicherheitsvorrichtung nach Anspruch 3, **dadurch gekennzeichnet, dass** die Blockierhülse (25) einen insbesondere ringförmigen Aufnahmeraum (33) aufweist, in dem ein zugeordneter äußerer Abstütz-Wälzkörper (34c) in der Verriegelungsposition (45) eintaucht wenn sich die Blockierhülse (25) in der Freigabestellung befindet, aber nicht wenn sich die Sperrhülse (25) in der Blockierstellung befindet.

5. Sicherheitsvorrichtung nach Anspruch 4, **dadurch gekennzeichnet, dass** die Abstützhülse (42) eine Außenwandung aufweist, an der ein mit dem Aufnahmeraum (33) der Blockiereinheit (21) in der Abstützposition (43) zusammenwirkender Abstützhülsen-Aufnahmeraum (46) ausgebildet ist, in den in der Abstützposition (43) ein Abstütz-Wälzkörper (34a-c) eintaucht.

6. Sicherheitsvorrichtung nach einem der vorhergehenden Ansprüche, **dadurch gekennzeichnet, dass** die Abstütz-Wälzkörper (34a-c) zylindrisch ausgebildet sind.

7. Sicherheitsvorrichtung nach einem der vorhergehenden Ansprüche, **dadurch gekennzeichnet, dass** die Elektromagneteinrichtung (18) mehrere um die Kopplungsstange (12) herum gruppierte Elektromagnete (57) aufweist, die die Abstützhülse (42) bei Bestromung gemeinsam in der Abstützposition (43) halten.

8. Sicherheitsvorrichtung nach einem der vorhergehenden Ansprüche, **dadurch gekennzeichnet, dass** die Auslösefedereinrichtung (49) mehrere um die Kopplungsstange (12) herum gruppierte Auslösefedern (48) aufweist, die die Abstützhülse (42) bei Deaktivierung der Elektromagneteinrichtung (18) gemeinsam in die Löseposition (44) bewegen.

9. Sicherheitsvorrichtung nach einem der Ansprüche 4 oder 5, **dadurch gekennzeichnet, dass** die Blockierhülse (25) einen mit einem Gegen-Anschlag (40) ausgebildeten Hülseninnenabschnitt (37) aufweist, der die Kopplungsstange (12) konzentrisch umgibt und der in einen ringförmigen Zwischenraum (23) zwischen einem zylindrischen Gehäuseinnenabschnitt (22) des Gehäuses (13) und der Kopplungsstange (12) eintaucht, und wobei die Blockierhülse (25) einen Hülsenaußenabschnitt (24) aufweist, der den Gehäuseinnenabschnitt (22) konzentrisch umgibt und an dessen Innenwandung der Aufnahmeraum (33) für die Arretier-Wälzkörper (34a-c)ausgebildet ist.

10. Sicherheitsvorrichtung nach einem der vorhergehenden Ansprüche, **gekennzeichnet durch** Rückstellmittel zur Rückstellung der Blockiereinheit (21) gegen die Federkraft der Federeinrichtung (28) von der Blockierstellung (30) in die Freigabestellung (31).

11. Sicherheitsvorrichtung nach einem der vorhergehenden Ansprüche, **dadurch gekennzeichnet, dass** eine Rückhalteeinrichtung (51) zur Rückhaltung der Abstütz-Wälzkörper (34a-c) gegen Bewegung nach radial außen in der Blockierstellung (30) der Blockiereinheit (22) vorhanden ist.

12. Sicherheitsvorrichtung nach Anspruch 11, **dadurch gekennzeichnet, dass** die Rückhalteeinrichtung (51) ein insbesondere dem jeweils radial äußersten Abstütz-Wälzkörper (34c) einer jeweiligen Abstütz-Wälzkörper-Gruppe (50) zugeordnetes Rückhalteglied (52) aufweist, das zwischen einer den zugeordneten Abstütz-Wälzkörper (34c) zurückhaltenden Rückhalteposition (53) und einer Nichtgebrauchsposition (54) beweglich gelagert ist.

13. Antriebseinheit mit einem Linearantrieb und einer Sicherheitsvorrichtung (11), **dadurch gekennzeichnet, dass** die Sicherheitsvorrichtung (11) nach einem der vorhergehenden Ansprüche ausgebildet ist.

14. Ventil, insbesondere Prozessventil mit einer Ventilarmatur und einer Antriebseinheit, **dadurch gekennzeichnet, dass** die Antriebseinheit nach Anspruch 13 ausgebildet ist.

## Claims

1. A safety device for detachably locking the output member of a linear drive, comprising:
- a coupling rod (12) which can be coupled to the output member of the linear drive, wherein the output member is movable by means of the coupling rod (12),
- a housing (13) through which the coupling rod (12) passes in a linearly displaceable manner,
- a blocking unit (21) through which the coupling rod (12) passes in a linearly displaceable manner and which is movable, relative to the housing (13), between a blocking position (30) which blocks a stroke of the coupling rod (12) and a release position (31) which allows a linear movement of the coupling rod (12),
- a spring means (28) for preloading the blocking unit (21) into the blocking position (30),
- a locking means (41) for locking the blocking unit (21) in the release position (31), the locking means (41) comprising locking rolling bodies (34a-c) accommodated in the housing (13) and a support sleeve (42) through which the coupling rod (12) passes in a linearly displaceable manner, it being possible to move the support sleeve (42) between a support position (43), in which the support rolling bodies (34a-c) are held in a latching position (45) radially outwards in latching engagement with the blocking unit (21), and a disengaged position (44), in which a retraction of the support rolling bodies (34a-c) radially inwards out of engagement with the blocking unit (21) is made possible,
- an electromagnet means (18) which, when energized, holds the support sleeve (42) in the support position (43) against the actuating force of at least one release spring (48) of a release spring means (49) in such a way that, in the event of a power failure, the holding function can be reversed and the support sleeve (42) moves into the disengaged position (44) by means of the at least one release spring (48), as a result of which the blocking unit (21) can be transferred into the blocking position (30) by means of the spring means (28);
**characterized in that** a plurality of support rolling body groups (50) are provided which are grouped around the circumference of the support sleeve (42), each of which has a plurality of support rolling bodies (34a-c) arranged one after the other in the radial direction, wherein a radial extension of the support rolling bodies (34a-c) within a support rolling body group (50) is greater in the locking position of the support sleeve (42) than in the disengaged position (44) of the support sleeve (42).

2. The safety device according to claim 1, **characterized in that,** in the disengaged position (44) of the support sleeve (42), the support rolling bodies (34a-c) of a respective rolling body group (50) are arranged so as to be staggered above one another in the vertical direction.

3. The safety device according to either preceding claim, **characterized in that** the blocking unit (21) has a blocking sleeve (25) through which the coupling rod (12) passes and which, in the release position (31), supports the locking rolling bodies (34a-c) in a direction radially outwards and holds them in the latching position (45).

4. The safety device according to claim 3, **characterized in that** the blocking sleeve (25) has an, in particular, annular receiving space (33) which an associated outer support rolling body (34c) enters in the locking position (45) when the blocking sleeve (25) is in the release position, but not when the locking sleeve (25) is in the blocking position.

5. The safety device according to claim 4, **characterized in that** the support sleeve (42) has an outer wall on which is formed a support sleeve receiving space (46) which interacts with the receiving space (33) of the blocking unit (21) in the support position (43), into which a support rolling body (34a-c) enters in the support position (43).

6. The safety device according to any of the preceding claims,
**characterized in that** the support rolling bodies (34a-c) are cylindrical.

7. The safety device according to any of the preceding claims,
**characterized in that** the electromagnet means (18) has a plurality of electromagnets (57) which are grouped around the coupling rod (12) and when energized jointly hold the support sleeve (42) in the support position (43).

8. The safety device according to any of the preceding claims,
**characterized in that** the release spring means (49) has a plurality of release springs (48) which are grouped around the coupling rod (12) and jointly move the support sleeve (42) into the disengaged position (44) when the electromagnet means (18) is deactivated.

9. The safety device according to either of claims 4 or 5,
**characterized in that** the blocking sleeve (25) has a sleeve inner portion (37) which is formed so as to comprise a counter-stop (40), concentrically surrounds the coupling rod (12) and dips into an annular intermediate space (23) between a cylindrical housing inner portion (22) of the housing (13) and the coupling rod (12), and wherein the blocking sleeve (25) has a sleeve outer portion (24) which concentrically surrounds the housing inner portion (22) and on the inner wall of which the receiving space (33) for the locking rolling bodies (34a-c) is formed.

10. The safety device according to any of the preceding claims, **characterized by** restoring means for returning the blocking unit (21) against the spring force of the spring means (28) from the blocking position (30) into the release position (31).

11. The safety device according to any of the preceding claims, **characterized in that** a retaining means (51) is provided for retaining the support rolling bodies (34a-c) against movement radially outwards in the blocking position (30) of the blocking unit (22).

12. The safety device according to claim 11, **characterized in that** the retaining means (51) has a retaining member (52) associated in particular with the radially outermost support rolling body (34c) of a relevant support rolling body group (50), which retaining member is movably mounted between a retaining position (53) retaining the associated support rolling body (34c) and a non-use position (54).

13. A drive unit comprising a linear drive and a safety device (11), **characterized in that** the safety device (11) is designed according to any of the preceding claims.

14. A valve, in particular a process valve comprising a valve fitting and a drive unit, **characterized in that** the drive unit is designed according to claim 13.

## Revendications

1. Dispositif de sécurité pour l'arrêt libérable de l'organe de sortie d'un entraînement linéaire présentant :
- une tige d'accouplement (12) pouvant être accouplée à l'organe de sortie de l'entraînement linéaire, dans lequel l'organe de sortie peut être déplacé au moyen de la tige d'accouplement (12),
- un boîtier (13) traversé par la tige d'accouplement (12) de manière à pouvoir être coulissé linéairement,
- une unité de blocage (21) traversée par la tige d'accouplement (12) de manière à pouvoir être coulissée linéairement, laquelle unité de blocage peut être déplacée entre une position de blocage (30) bloquant une course de la tige d'accouplement (12) et une position de libération (31) permettant un déplacement linéaire de la tige d'accouplement (12) par rapport au boîtier (13),
- un appareil à ressort (28) pour la précontrainte de l'unité de blocage (21) dans la position de blocage (30),
- un appareil d'arrêt (41) pour l'arrêt de l'unité de blocage (21) dans la position de libération (31), dans lequel l'appareil d'arrêt (41) présente des corps roulants d'arrêt (34a-c) logés dans le boîtier (13) et une douille de support (42) traversée par la tige d'accouplement (12) de manière à pouvoir être coulissée linéairement, dans lequel la douille de support (42) peut être déplacée entre une position de support (43), dans laquelle les corps roulants de support (34a-c) sont maintenus dans une position de verrouillage (45) radialement extérieure mise en prise de verrouillage avec l'unité de blocage (21), et une position de dégagement (44), dans laquelle un recul des corps roulants de support (34a-c) est permis radialement vers l'intérieur hors de prise avec l'unité de blocage (21),
- un appareil à électroaimants (18) qui, lors d'une alimentation électrique, retient la douille de support (42) dans la position de support (43) contre la force de réglage d'au moins un ressort de déclenchement (48) d'un appareil à ressorts de déclenchement (49), de telle sorte que, lors d'une panne de courant, la fonction de maintien peut être annulée et la douille de support (42) accède, au moyen de l'au moins un ressort de déclenchement (48), à la position de dégagement (44), moyennant quoi l'unité de blocage (21) peut être transférée dans la position de blocage (30) au moyen de l'appareil à ressort (28),
**caractérisé en ce que** plusieurs groupes de corps roulants de support (50) groupés autour de la circonférence de la douille de support (42) sont prévus, lesquels présentent respectivement plusieurs corps roulants de support (34a-c) disposés les uns derrière les autres dans la direction radiale, dans lequel une extension radiale des corps roulants de support (34a-c) à l'intérieur d'un groupe de corps roulants de support (50) est plus grande dans la position d'arrêt de la douille de support (42) que dans la position de dégagement (44) de la douille de support (42).

2. Dispositif de sécurité selon la revendication 1,
**caractérisé en ce que** les corps roulants de support (34a-c) d'un groupe de corps roulants de support (50) respectif sont disposés de manière échelonnée les uns au-dessus des autres dans la direction de hauteur dans la position de dégagement (44) de la douille de support (42), dans lequel l'échelonnement provoque une réduction de l'extension radiale dans la direction de hauteur.

3. Dispositif de sécurité selon l'une des revendications précédentes, **caractérisé en ce que** l'unité de blocage (21) présente une douille de blocage (25) traversée par la tige d'accouplement (12), laquelle douille de blocage supporte, dans la position de libération (31), les corps roulants d'arrêt (34a-c) dans la direction radialement vers l'extérieur et les maintient dans la position de verrouillage (45).

4. Dispositif de sécurité selon la revendication 3, **caractérisé en ce que** la douille de blocage (25) présente un espace de réception (33), en particulier annulaire, dans lequel un corps de roulement de support extérieur (34c) associé s'enfonce dans la position de verrouillage (45) lorsque la douille de blocage (25) se trouve dans la position de libération, mais pas lorsque la douille de blocage (25) se trouve dans la position de blocage.

5. Dispositif de sécurité selon la revendication 4, **caractérisé en ce que** la douille de support (42) présente une paroi extérieure sur laquelle est réalisé un espace de réception de douille de support (46) coopérant avec l'espace de réception (33) de l'unité de blocage (21) dans la position de support (43), espace de réception de douille de support dans lequel, dans la position de support (43), un corps roulant de support (34a-c) est immergé.

6. Dispositif de sécurité selon l'une des revendications précédentes, **caractérisé en ce que** les corps roulants de support (34a-c) sont réalisés de manière cylindrique.

7. Dispositif de sécurité selon l'une des revendications précédentes, **caractérisé en ce que** l'appareil à électroaimants (18) présente plusieurs électroaimants (57) groupés autour de la tige d'accouplement (12), lesquels maintiennent conjointement, lors d'une alimentation électrique, la douille de support (42) dans la position de support (43).

8. Dispositif de sécurité selon l'une des revendications précédentes, **caractérisé en ce que** l'appareil à ressorts de déclenchement (49) présente plusieurs ressorts de déclenchement (48) groupés autour de la tige d'accouplement (12), lesquels déplacent conjointement, lors d'une désactivation de l'appareil à électroaimants (18), la douille de support (42) dans la position de dégagement (44).

9. Dispositif de sécurité selon l'une des revendications 4 ou 5, **caractérisé en ce que** la douille de blocage (25) présente une section intérieure de douille (37) réalisée avec une contre-butée (40), laquelle section intérieure de douille entoure de manière concentrique la tige d'accouplement (12) et est immergée dans un espace intermédiaire annulaire (23) entre une section intérieure de boîtier (22) cylindrique du boîtier (13) et la tige d'accouplement (12) et dans lequel la douille de blocage (25) présente une section extérieure de douille (24) qui entoure de manière concentrique la section intérieure de boîtier (22) et sur la paroi intérieure de laquelle est réalisé l'espace de réception (33) pour les corps roulants d'arrêt (34a-c).

10. Dispositif de sécurité selon l'une des revendications précédentes, **caractérisé par** un moyen de rappel pour le rappel de l'unité de blocage (21) contre la force de ressort de l'appareil à ressort (28) de la position de blocage (30) à la position de libération (31).

11. Dispositif de sécurité selon l'une des revendications précédentes, **caractérisé en ce qu'**un appareil de retenue (51) est disponible pour la retenue des corps roulants de support (34a-c) contre le déplacement radialement vers l'extérieur dans la position de blocage (30) de l'unité de blocage (22).

12. Dispositif de sécurité selon la revendication 11, **caractérisé en ce que** l'appareil de retenue (51) présente un organe de retenue (52) attribué en particulier au corps roulant de support (34c) respectivement le plus à l'extérieur radialement d'un groupe de corps roulants de support (50) respectif, lequel organe de retenue est placé de manière à pouvoir être déplacé entre une position de retenue (53) retenant le corps roulant de support (34c) attribué et une position de non utilisation (54).

13. Unité d'entraînement comportant un entraînement linéaire et un dispositif de sécurité (11), **caractérisée en ce que** le dispositif de sécurité (11) est réalisé selon l'une des revendications précédentes.

14. Soupape, en particulier soupape de processus comportant une robinetterie de soupape et une unité d'entraînement, **caractérisée en ce que** l'unité d'entraînement est réalisée selon la revendication 13.
